# EUROPÄISCHE PATENTSCHRIFT

(11) **EP 0 679 552 B1**
(45) Veröffentlichungstag und Bekanntmachung des Hinweises auf die Patenterteilung: **11.08.1999**
(21) Anmeldenummer: 95106182.9
(22) Anmeldetag: 26.04.1995
(51) Int. Cl.: B60Q 1/00, B60Q 1/04

(54) **Abdeckeinheit für ein Reflektoren aufnehmendes Gehäuse einer Lichteinheit für Kraftfahrzeuge**
Cover for lighting unit with reflectors
Couvercle pour unité d'éclairage avec réflecteurs

(30) Priorität: 28.04.1994 DE 4414899
(43) Veröffentlichungstag der Anmeldung: 02.11.1995
(73) Patentinhaber: Hella KG Hueck & Co., 59552 Lippstadt (DE); DaimlerChrysler AG, 70567 Stuttgart (DE)
(72) Erfinder: Jocher, Reiner, D-71134 Aidlingen (DE); Gerstner, Harald, D-71134 Aidlingen (DE); Kemper, Wolfgang, D-59602 Rüthen (DE); Pokraka, Gerd, D-59558 Lippstadt (DE); Schürhoff, Konrad, D-59302 Oelde (DE)

(56) Entgegenhaltungen:
- EP-A- 0 160 918
- DE-A- 3 328 788
- DE-A- 4 120 503

## Beschreibung

Die Erfindung betrifft eine Abdeckeinheit für ein Reflektoren aufnehmendes Gehäuse einer Lichteinheit für Kraftfahrzeuge, mit einem Rahmen, welcher auf seiner Rückseite am äußeren Rand umlaufend eine Anlagefläche für das Gehäuse aufweist und in welchen zwei Öffnungen eingebracht sind, und mit einer die Öffnungen des Rahmens verschließenden schalenförmigen Abschlußscheibe, welche mit ihrem äußeren umlaufenden Rand in eine in die Vorderseite des Rahmens eingebrachte Aufnahmerinne dicht eingreift.

Eine solche Abdeckeinheit für ein Reflektoren aufnehmendes Gehäuse einer Lichteinheit für Kraftfahrzeuge ist aus der DE 41 20 503 A1 vorbekannt. Die Lichteinheit weist zwei seitlich nebeneinander angeordnete Scheinwerfer auf. Die Reflektoren der beiden Scheinwerfer sind starr miteinander verbunden und in das Gehäuse, welches topfförmig ausgeführt ist, eingesetzt und um zwei senkrecht verlaufende Achsen verschwenkbar. In den äußeren umlaufenden Rand des topfförmigen Gehäuses ist umlaufend eine Aufnahmerinne für eine Ringdichtung angebracht. Die Abdeckeinheit mit welcher die vordere offene Seite des Gehäuses verschließbar ist, besteht im wesentlichen aus einem aus Kunststoff hergestellten Rahmen, mit zwei Öffnungen für jeweils einen Scheinwerfer, zwei in jeweils eine Öffnung des Rahmens eingesetzten schalenförmigen, lichtdurchlässigen Lichtscheiben und einer den gesamten Rahmen überspannenden haubenartigen, lichtdurchlässigen Abschlußscheibe. Die Abdeckeinheit ist mit dem die Reflektoren aufnehmenden Gehäuse lösbar verbunden. Deshalb muß bei einer Beschädigung der Abschlußscheibe und/oder des Rahmens nicht die gesamte Lichteinheit, sondern lediglich die Abdeckeinheit ausgewechselt werden. Damit nach dem Auswechseln der Abdeckeinheit sichergestellt ist, daß sie mit dem äußeren umlaufenden Rand ihres Rahmens dicht an der in die Aufnahmerinne des Gehäuses eingesetzten Ringdichtung anliegt, muß der Rahmen in sich sehr verwindungssteif sein. Die hohe Verwindungssteifigkeit der Abdeckeinheit wird erreicht durch seine Doppelwandigkeit, wobei die eine Wand durch den Rahmen und die in seine Öffnung eingesetzten lichtdurchlässigen Lichtscheiben und die andere Wand durch die den gesamten Rahmen überspannende haubenartige, lichtdurchlässige Abschlußscheibe gebildet wird, und durch eine an den äußeren Rand des Rahmens umlaufend angebrachte hohe Versteifungsrippe, welche an ihrem freien Ende eine Anlagefläche für die Ringdichtung des Gehäuses aufweist. Nachteilig hierbei ist es, daß der Rahmen an seinem äußeren umlaufenden Rand wegen der dort angeformten umlaufenden Versteifungsrippe entsprechend hoch ausgeführt sein muß, und um eine ausreichende Steifigkeit des Rahmens zu erhalten, ist zusätzlich zu den beiden schalenförmigen Lichtscheiben eine den gesamten Rahmen überspannende haubenartige Abschlußscheibe notwendig. Außerdem kann in den Innenraum der doppelwandig ausgeführten Abdeckeinheit feuchte Luft eindringen, deren Feuchtigkeit an der Innenseite der Abschlußscheibe zu Wassertröpfchen kondensiert. Die Innenseite der Abschlußscheibe kann nicht gesäubert werden, da sie mit ihrem äußeren umlaufenden Rand in eine in den äußeren Rand des Rahmens eingebrachte Aufnahmerinne eingeklebt ist, und die beiden lichtdurchlässigen Lichtscheiben sind mit ihrem äußeren umlaufenden Rand mit dem Rand der jeweiligen Öffnung des Rahmens verklebt. Ferner kann die Abdeckeinheit, obwohl sie einen Rahmen mit zwei Öffnungen aufweist, wegen ihrer den gesamten Rahmen überspannenden Abschlußscheibe nur hinter einer einzigen Karosserieöffnung in eine Fahrzeugkarosserie eingesetzt werden.

Aus der DE 34 17 041 C2 ist eine Lichteinheit für Kraftfahrzeuge bekannt, bei welcher in einem Abstand nebeneinander angeordnete, separate Scheinwerfer jeweils verschwenkbar mit einem gemeinsamen Tragrahmen verbunden sind. Eine solche Lichteinheit ist zwar hinter zwei Karosserieöffnungen in eine Fahrzeugkarosserie einsetzbar, jedoch wird bei einer Beschädigung der Abschlußscheibe eines oder der beiden Scheinwerfer ihre Einstelleinrichtung zum Tragrahmen hin mit zerstört, so daß die gesamte Lichteinheit ausgewechselt werden muß.

Aufgabe der Erfindung ist es, die im Oberbegriff des Anspruchs 1 beschriebene Abdeckeinheit für ein Reflektoren aufnehmendes Gehäuse einer Lichteinheit für Kraftfahrzeuge derart zu verbessern, daß sie auch dann eine ausreichende Verwindungssteifigkeit aufweist, wenn der Rahmen an seinem äußeren umlaufenden Rand in seiner Höhe sehr kleinbaut, die beiden Öffnungen des Rahmens mit ihrem umlaufend Rand annähernd in einer Ebene verlaufen und die die Öffnung abdeckende lichtdurchlässige Abschlußscheibe von der Rückseite der Abdeckeinheit her frei zugänglich ist. Darüber hinaus soll die Abdeckeinheit hinter zwei sich benachbarten Karosserieöffnungen in die Fahrzeugkarosserie einsetzbar sein und in beide Karosserieöffnungen mit einer Abschlußscheibe hineinragen können.

Diese Aufgabe wird erfindungsgemäß dadurch gelöst, daß
- die auf der Rückseite des Rahmens verlaufende Anlagefläche von der Innenseite einer in den äußeren Rand des Rahmens eingebrachten Aufnahmerinne gebildet ist;
- die die Anlagefläche aufweisende Aufnahmerinne bis auf einen zwischen den beiden Öffnungen verlaufenden Wandabschnitt des Rahmens an die beiden Öffnungen angrenzend verläuft;
- die Öffnungen des Rahmen durch jeweils eine tiefe schalenförmige, lichtdurchlässige Abschlußscheibe abgeschlossen sind;
- die Öffnungen des Rahmens von jeweils einer Aufnahmerinne für eine der Abschlußscheiben angrenzend umgeben ist;
- die die Anlagefläche aufweisende Aufnahmerinne in den Abschnitten, in welchen sie angrenzend an einer der beiden Öffnungen verläuft, mit einer der beiden Aufnahmerinnen einen gemeinsamen Boden aufweist;
- an den Rand der Öffnungen des Rahmens umlaufend ein in die schalenförmige Abschlußscheibe hineinragender Kragen angeformt ist.

Hierbei ist es vorteilhaft, daß die beiden Öffnungen des Rahmens bis an den von den Aufnahmerinnen gebildeten Rand des Rahmens heranreichen und somit so groß wie möglich gestaltet sind. Trotz dieses dünnen Rahmens an seinem die Öffnungen begrenzenden äußeren Rand, ist er in sich sehr verwindungssteif, da er in diesen dünnen Abschnitten wegen den einen gemeinsamen Boden aufweisenden Aufnahmerinnen im Querschnitt H-förmig gestaltet ist. Zu einer Erhöhung der Verwindungssteifigkeit tragen auch die an den Rand der beiden Öffnungen angeformten Kragen, welche sich in die Abschlußscheibe hineinerstrecken, bei. Außerdem dienen diese Kragen zusätzlich als Abdeckung für die Innenseite des äußeren Seitenrandes der schalenförmigen Abschlußscheiben. Dadurch ist bei einem Blick durch die Vorderseite der Abschlußscheiben hindurch, das hinter ihren Seitenrändern liegende Karosserieinnere nicht einsehbar. Wegen dem eine hohe Verwindungssteifigkeit aufweisenden Rahmen ist es sicher, daß der Rahmen in dem Zeitraum zwischen seinem Entformen bis zum Aushärten des Kunststoffes sich nicht durch innere Verspannungskräfte so stark verzieht, daß die Anlagefläche für das Gehäuse einen unerwünschten Verlauf einnimmt und somit die Abdeckeinheit nicht mehr dicht mit dem äußeren Rand des Gehäuses verbindbar ist.

Da der Rahmen in sich ausreichend verwindungssteif ist, ist es ausreichend, wenn seine bei den Öffnungen durch jeweils eine lichtdurchlässige, schalenförmige Abschlußscheibe abgeschlossen sind. Dabei können die beiden Abschlußscheiben auch dünnwandig gestaltet und aus Kunststoff hergestellt sein. Durch die beiden schalenförmigen Abschlußscheiben ist es möglich, daß die Abdeckeinheit hinter zwei Karosserieöffnungen in die Fahrzeugkarosserie einsetzbar ist und so zu den Öffnungen justiert werden kann, daß sie mit der Vorderseite ihrer Abschlußscheiben bündig zu der an sie angrenzenden Karosserie verläuft und die Abschlußscheiben umlaufend einen gleich großen Abstand zum angrenzenden Rand der Karosserieöffnung aufweisen.

Weiterhin ist es vorteilhaft, wenn eine Versteifungsrippe an die Rückseite der zwischen den beiden Aufnahmerinnen für die Abschlußscheiben verlaufenden Abschnitten der die Anlagefläche für das Gehäuse aufweisenden Aufnahmerinne angeformt ist und in die innere Seitenwand der die Anlagefläche aufweisenden Aufnahmerinne übergeht. Dadurch ist der die beiden Öffnungen verbindende Abschnitt des Rahmens gut versteift. In diesem Zusammenhang ist es weiterhin zweckmäßig, wenn der zwischen den Abschlußscheiben verlaufende Wandabschnitt des Rahmens an die freien Enden der sich zugewandten Seitenwände der Aufnahmerinne für Abschlußscheiben und die freien Enden der die beiden Aufnahmerinnen miteinander verbindenden Versteifungsrippen angeformt ist. Dadurch muß der zwischen den beiden Abschlußscheiben verlaufende Wandabschnitt keine Erhöhung oder Vertiefung aufweisen.

Vorteilhaft ist es weiterhin, wenn der Boden der drei Aufnahmerinnen in einer Fläche verläuft. Dadurch baut der Rahmen an seinem äußeren um laufenden Rand in seiner Höhe sehr flach.

Von Vorteil ist es weiterhin, wenn der in die Abschlußscheiben hineinragende Kragen zumindest in einem Abschnitt durch einen an seine Innenseite angeformten Schirm, welcher mit seinem freien Ende zur Rückseite der Abdeckeinheit hinweist, doppelwandig ausgeführt ist. Dieser Schirm dient einerseits zur Erhöhung der Steifigkeit des Rahmens und andererseits ist durch ihn die Größe der Öffnung zur Rückseite der Abdeckeinheit hin bestimmt.

Bei einer besonders vorteilhaften Weiterbildung der Erfindung sind die beiden schalenförmigen Abschlußscheiben durch mindestens einen Steg, welcher an ihren äußeren, sich zugewandten Wandabschnitte angeformt ist, einstückig hergestellt. Dadurch sind sowohl die beiden Abschlußscheiben leicht und schnell montierbar als auch ihr Abstand zueinander ist immer genau vorgegeben und somit nicht von aufwendigen Vorrichtungen bei ihrer Montage abhängig. Wegen der genauen Lage der beiden schalenförmigen Abschlußscheiben zueinander ist es immer sicher, daß nach einem Justieren der Abdeckeinheit in der Fahrzeugkarosserie zwischen den beiden Abschlußscheiben und dem an sie angrenzenden Rand der Karosserie umlaufend ein gleich großer Spalt besteht.

Zudem ist es vorteilhaft, wenn in die auf der Rückseite des Rahmens verlaufende Aufnahmerinne eine Ringdichtung eingesetzt ist, mit welcher die Abdeckeinheit an den Rand eines Gehäuses dicht anlegbar ist. Dadurch dient die Aufnahmerinne auf der Rückseite des Gehäuses zusätzlich zur Aufnahme einer Ringdichtung.

Außerdem ist es vorteilhaft, wenn die Innen- und Außenseite des an den Rand der beiden Öffnungen angeformten Kragens mit einer Oberflächenschicht versehen ist. Die Oberflächenschicht kann ihrem Aussehen nach der an die Abdeckeinheit angrenzenden Farbe der Karosserie oder der Reflexionsfläche der von der Abdeckeinheit abzudeckenden Reflektoren angepaßt sein.

Bei einer besonders vorteilhaften Weiterbildung der Erfindung ist eine von der Rückseite der Abdeckeinheit her in eine Öffnung des Rahmens eingesetzte und einen Abschnitt der Öffnung abdeckende lichtdurchlässige Lichtscheibe mit an ihrem äußeren um laufenden Rand angeformten und in Einsetzrichtung der Lichtscheibe weisenden Fahnen in entsprechend große Schlitze des Randes der Öffnung des Rahmens eingeschoben. Hierbei ist es zweckmäßig, wenn die Fahnen den Abschnitt einer inneren Seitenwand der Aufnahmerinne für eine der Abschlußscheiben komplettieren und zusammen mit der Abschlußscheibe in der Aufnahmerinne mit dem Rahmen verklebt sind. Dadurch kann diese Öffnung sowohl für einen Scheinwerfer als auch für eine Leuchte, wie zum Beispiel eine Blinkleuchte, dienen. Für die Blinkleuchte ist dann die lichtdurchlässige Lichtscheibe vorgesehen, die, obwohl ein Kragen zur Versteifung an dem Rand der Öffnung der Rahmens angeformt ist, zusammen mit der Abschlußscheibe in der Aufnahmerinne verklebbar ist. Hierbei ist es zweckmäßig, wenn im Bereich der lichtdurchlässigen Lichtscheibe der Kragen frei von einem Schirm ist und die lichtdurchlässige Lichtscheibe an die Innenseite des Kragens angrenzt.

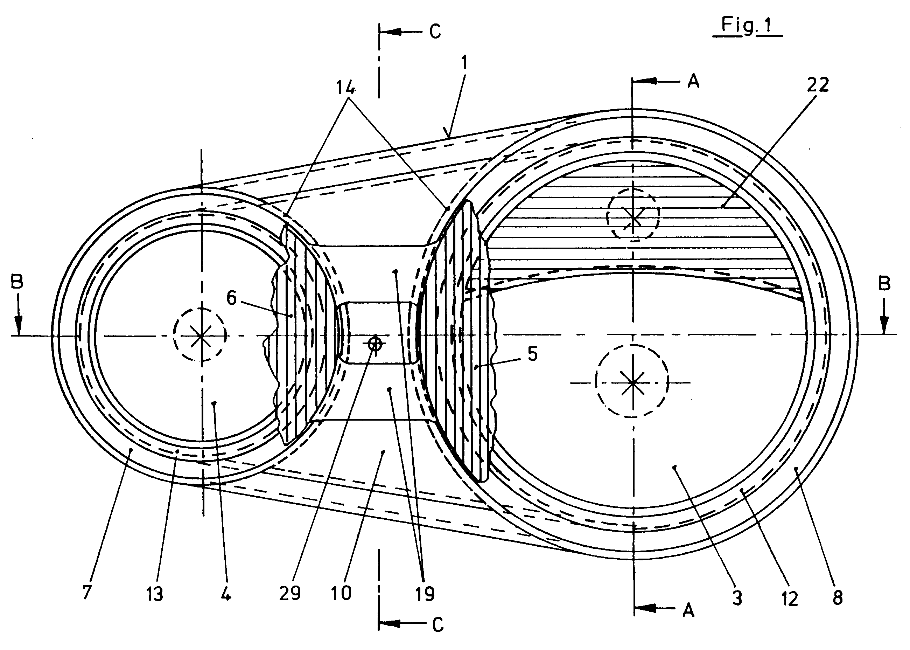

Ein Ausführungsbeispiel der Erfindung ist in der Zeichnung dargestellt, und zwar zeigen
- Figur 1: in einer Vorderansicht eine Abdeckeinheit für ein Reflektoren aufnehmendes Gehäuse einer Lichteinheit für Kraftfahrzeuge;

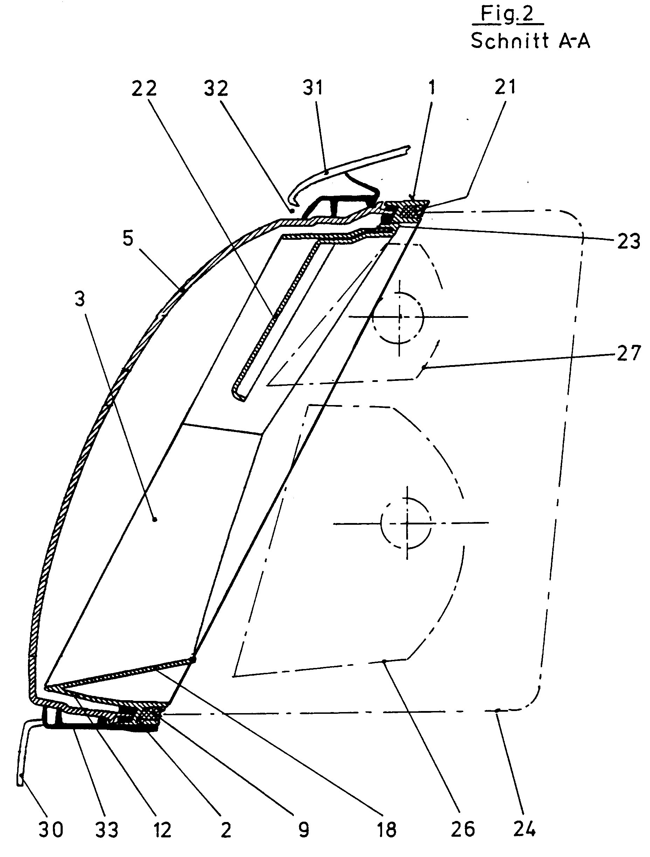

- Figur 2: einen vertikalen Schnitt nach der Linie A-A durch die Abdeckeinheit in Figur 1, wobei das Gehäuse und die Reflektoren strichpunktiert sind;

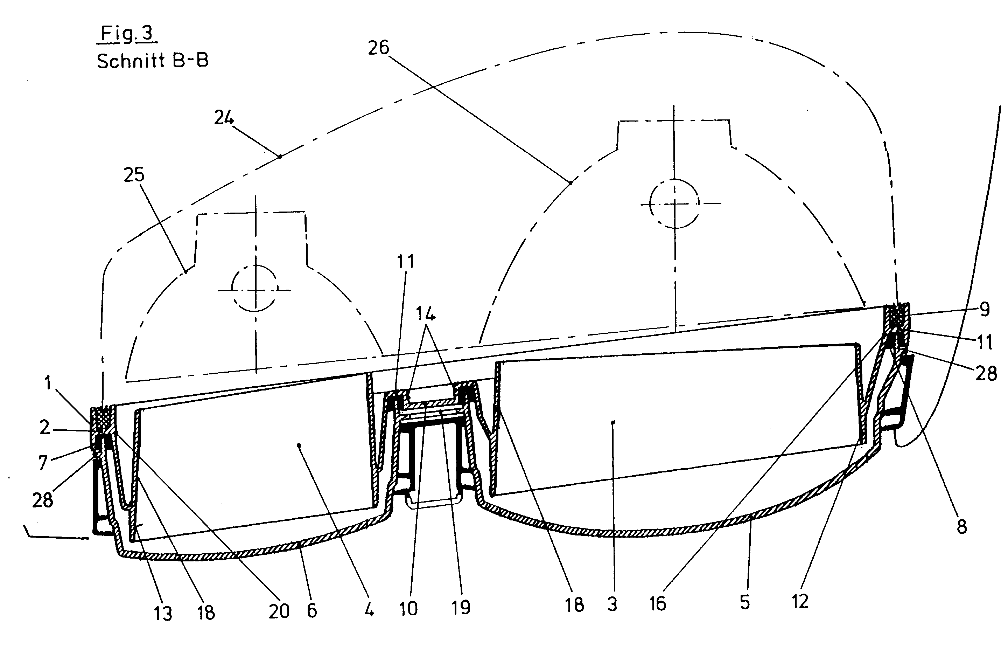

- Figur 3: einen horizontalen mittleren Schnitt nach der Linie B-B durch die Abdeckeinheit in Figur 1 und

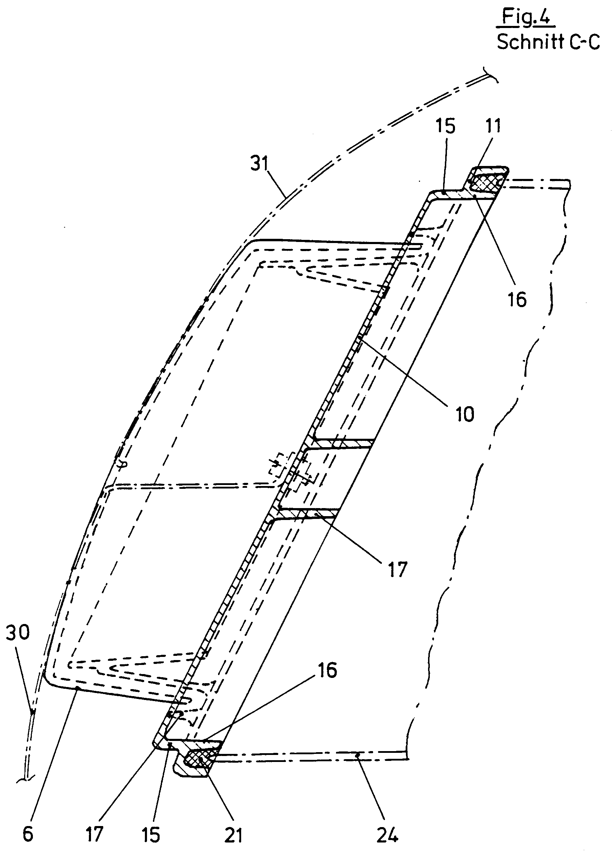

- Figur 4: einen vertikalen Schnitt nach der Linie C-C durch die Abdeckeinheit in Figur 1.

Die Abdeckeinheit weist einen aus starrem Kunststoff hergestellten Rahmen (1), mit zwei Öffnungen (3, 4) und zwei jeweils eine der Öffnungen (3, 4) abschließenden schalenförmigen, lichtdurchlässigen Abschlußscheiben (5, 6) auf, welche aus Kunststoff hergestellt und dünnwandig gestaltet sind. Die Abdeckeinheit ist auf seiner Rückseite unter Zwischenschaltung einer Ringdichtung (21) mit einer am äußeren Rand des Rahmens (1) umlaufenden Anlagefläche (2) an dem äußeren Rand eines Gehäuses (24) dicht anlegbar. Zwei seitlich nebeneinander angeordnete und einstückig hergestellte Scheinwerferreflektoren (25, 26) sind in das Gehäuse (24) eingesetzt und mit ihm verschwenkbar verbunden. Oberhalb des Scheinwerferreflektors (26) ist ein Leuchtenreflektor (27) angeordnet. Der Scheinwerferreflektor (25) ist die Öffnung (4) des Rahmens (1) und dem Scheinwerferreflektor (26) und dem Leuchtenreflektor (27) ist die gemeinsame Öffnung (3) des Rahmens (1) zugeordnet. Die Anlagefläche (2) für das Gehäuse (24) ist von der Innenseite einer in den äußeren Rand des Rahmens (1) eingebrachten umlaufenden Aufnahmerinne (9) für die Ringdichtung (21) gebildet. Die beiden Öffnungen (3, 4) des Rahmens (1), welche kreisrund oder oval gestaltet sein können, erstrecken sich, bis auf den zwischen ihnen verlaufenden Wandabschnitt (10), bis an die Aufnahmerinne (9) heran, die die Ringdichtung (21) aufnimmt. Auf der Vorderseite des Rahmens (1) sind angrenzend an die Öffnungen (3, 4) umlaufende Aufnahmerinnen (7, 8) für die Abschlußscheiben (5, 6) eingebracht.

Die Aufnahmerinne (9) für die Ringdichtung (21) und die Aufnahmerinnen (7, 8) für die Abschlußscheiben (5, 6) weisen in den Abschnitten, in welchen die Öffnungen (3, 4) bis an den äußeren Rand des Rahmens (1) heranreichen, einen gemeinsamen Boden (11) auf. Dadurch weist der Rahmen (1) in diesen dünnen Abschnitten einen H-förmigen Querschnitt auf.

Die schalenförmigen Abschlußscheiben (5, 6) greifen mit ihrem äußeren umlaufenden Rand (28) in die in die Vorderseite des Rahmens (1) eingebrachten Aufnahmerinnen (7, 8) hinein, sind in diesen mit dem Rahmen (1) dicht verklebt und bilden somit mit dem Rahmen eine starre Einheit. Der Boden (11) der drei Aufnahmerinnen (7, 8, 9) verläuft in einer Ebene. An die Rückseite der Aufnahmerinne (9) für das Gehäuse (24) ist in den zwischen den beiden Abschlußscheiben (5, 6) verlaufenden beiden Abschnitten eine Versteifungsrippe (15) angeformt, welche in die innere Seitenwand der Aufnahmerinne (9) übergeht. Somit ist der Rahmen (1) in diesen Abschnitten im Querschnitt h-förmig ausgeführt.

Der zwischen den beiden Abschlußscheiben (5, 6) verlaufende Wandabschnitt (10) des Rahmens ist an die freien Enden der Versteifungsrippen (15) und der äußeren Seitenwände (14,) der Aufnahmerinnen (7, 8) für die Abschlußscheiben (6, 5) angeformt. Die inneren Seitenwände (16) der Aufnahmerinnen (7, 8) für die Abschlußscheiben (6, 5) gehen in einen Kragen (12 bzw. 13) über, welcher sich benachbart zu den Seitenrändern der schalenförmigen Abschlußscheibe (5, 6) bis nahe zur Vorderseite der Absschlußscheiben hin erstreckt. An die Innenseite des in die Abschlußscheibe (6) hineinragenden Kragens (13) ist umlaufend ein Schirm (18) angeformt, welcher mit seinem freien Ende auf den äußeren Rand des Scheinwerferreflektors (25) zu weist. An den in die Abschlußscheibe (5) hineinragenden Kragen (12) ist ausschließlich im Bereich des Scheinwerferreflektors (26) an seine Innenseite ein Schirm (18) angeformt, welcher mit seinem freien Ende zum äußeren Rand des Scheinwerferreflektors (26) hin weist und zu seinem Rand beabstandet ist. Im Bereich der Öffnung (3) des Rahmens (1) für den Leuchtenreflektor (27) ist in der Öffnung (3) eine lichtdurchlässige, mit optischen Mitteln besetzte Lichtscheibe (22) eingesetzt. Die Lichtscheibe (22) erstreckt sich bis zu dem Abschnitt des Kragens (12), welcher frei von dem Schirm (18) ist, und weist an seinem Rand eine in Lichtaustrittsrichtung weisende Fahne (23) auf, welche in einen Schlitz der Aufnahmerinne (8) für die Abschlußscheibe (5) eingreift und die Aufnahmerinne (8) in diesem Abschnitt komplettiert. Somit ist die Lichtscheibe (22) zusammen mit der Abschlußscheibe (5) durch den in die Aufnahmerinne (8) eingebrachten Kleber fest mit dem Rahmen (1) verbunden. Die beiden lichtdurchlässigen Abschlußscheiben (5, 6) sind durch zwei ihre äußeren Ränder verbindenden Stege (19) einstückig hergestellt.

Zwischen den beiden Stegen (19) und der beiden schalenförmigen Abschlußscheiben (5, 6) ist in den Wandabschnitt (10) des Rahmens (1) eine als Befestigungsmittel (29) dienende Öffnung eingebracht, mit welcher die Abdeckeinheit an einem Karosserieteil (3) befestigbar ist. Das Karosserieteil (30) verläuft unterhalb der Abdeckeinheit, erstreckt sich mit einem Finger zwischen die beiden Abschlußscheiben (5, 6) und ist mit dem freien Ende des Fingers an dem Rahmen (1) befestigt. Oberhalb der Abdeckeinheit verläuft eine Motorhaube (31), welche sich ebenfalls mit einem Finger bis zu dem Finger des unteren Karosserieteils (30) hin erstreckt. Das Karosserieteil (30) und die Motorhaube (31) bilden zwei seitlich nebeneinander angeordnete Karosserieöffnungen, in welche sich die Abdeckeinheit mit den Abschlußscheiben (5, 6) hineinerstreckt. Hierbei ist die Abdeckeinheit so zu den Karosserieöffnungen angeordnet, daß die Vorderseiten ihrer Abschlußscheiben (5, 6) annähernd bündig zu der an sie angrenzenden Karosserie verlaufen und zwischen den Rändern der Karosserieöffnungen und den Abschlußscheiben (5, 6) umlaufend ein gleich großer Spalt (32) besteht. Ein Blick durch den um die Abschlußscheiben (5, 6) herum verlaufenden Spalt (32) hindurch, ist durch eine den Seitenrand der beiden Abschlußscheiben (5, 6) umgebende Ringdichtung (33) verhindert. Die beiden Ringdichtungen (33) sind durch mindestens einen zwischen ihnen verlaufenden Steg einstückig dargestellt und mit ihrem zur Rückseite der Abdeckeinheit hin gerichteten Seite an dem äußeren Rand des Rahmens (1) befestigt. Der Rahmen (1) weist an seinem äußeren Rand Befestigungsmittel (nicht dargestellt) auf, durch welche er lösbar mit dem Gehäuse (24) verbindbar ist.

### Bezugszeichenliste

Abdeckeinheit für ein Reflektoren aufnehmendes Gehäuse einer Lichteinheit für Kraftfahrzeuge
- 1: Rahmen
- 2: Anlagefläche
- 3, 4: Öffnungen
- 5, 6: Abschlußscheiben
- 7, 8, 9: Aufnahmerinnen
- 10: Wandabschnitt
- 11: Boden
- 12, 13: Kragen
- 14: Seitenwände
- 15: Versteifungsrippe
- 16: Seitenwand
- 17: Versteifungsrippe
- 18: Schirm
- 19: Steg
- 20: Seitenwand
- 21: Ringdichtung
- 22: Lichtscheibe
- 23: Fahne
- 24: Gehäuse
- 25, 26: Scheinwerferreflektor
- 27: Leuchtenreflektor
- 28: Rand
- 29: Befestigungsmittel
- 30: Karosserieteil
- 31: Motorhaube
- 32: Spalt
- 33: Ringdichtung

## Patentansprüche

1. Abdeckeinheit für ein Reflektoren aufnehmendes Gehäuse einer Lichteinheit für Kraftfahrzeuge, mit einem Rahmen (1), welcher auf seiner Rückseite am äußeren Rand umlaufend eine Anlagefläche für das Gehäuse (24) aufweist und in welchen zwei Öffnungen (3, 4) eingebracht sind, und mit einer die Öffnungen (3, 4) des Rahmens (1) verschließenden schalenförmigen Abschlußscheibe (5, 6), welche mit ihrem äußeren umlaufenden Rand in eine in die Vorderseite des Rahmens (1) eingebrachte Aufnahmerinne (7 bzw. 8) dicht eingreift,
dadurch gekennzeichnet, daß
- die auf der Rückseite des Rahmens (1) verlaufende Anlagefläche (2) von der Innenseite einer in den äußeren Rand des Rahmens (1) eingebrachten Aufnahmerinne (9) gebildet ist,
- die die Anlagefläche (2) aufweisende Aufnahmerinne (9) bis auf einen zwischen den Öffnungen (3, 4) verlaufenden Wandabschnitt (10) des Rahmens (1) an die beiden Öffnungen (3, 4) angrenzend verläuft,
- die Öffnungen (3, 4) des Rahmens (1) durch jeweils eine tiefe schalenförmige, lichtdurchlässige Abschlußscheibe (5, 6) abgeschlossen sind,
- die Öffnung (3, 4) des Rahmens (1) von jeweils einer Aufnahmerinne (7, 8) für eine der Abschlußscheiben (5, 6) angrenzend umgeben ist;
- die die Anlagefläche (2) aufweisende Aufnahmerinne (9) in den Abschnitten, in welchen sie angrenzend an einer der beiden Öffnungen (3, 4) verläuft, mit einer der beiden Aufnahmerinnen (7, 8) einen gemeinsamen Boden (11) aufweist,
- an den Rand der Öffnungen (3, 4) des Rahmens (1) umlaufend ein in die schalenförmige Abschlußscheibe (5, 6) hineinragender Kragen (12 bzw. 13) angeformt ist.

2. Abdeckeinheit nach Anspruch 1, dadurch gekennzeichnet, daß die Aufnahmerinnen (7, 8) für die Abschlußscheiben (5, 6) an den sich zugewandten Seitenwänden (14) durch Versteifungsrippen (15, 17) miteinander verbunden sind.

3. Abdeckeinheit nach Anspruch 2, dadurch gekennzeichnet, daß eine Versteifungsrippe (15) an die Rückseite der zwischen den beiden Aufnahmerinnen (7, 8) für die Abschlußscheiben (5, 6) verlaufenden Abschnitten der die Anlagefläche (2) für das Gehäuse (24) aufweisenden Aufnahmerinne (9) angeformt ist und in die innere Seitenwand (16) der die Anlagefläche (2) aufweisenden Aufnahmerinne (9) übergeht.

4. Abdeckeinheit nach Anspruch 3, dadurch gekennzeichnet, daß der zwischen den Abschlußscheiben (5, 6) verlaufende Wandabschnitt (10) des Rahmens (1) an die freien Enden der sich zugewandten Seitenwände (14) der Aufnahmerinnen (7, 8) für die Abschlußscheiben (5, 6) und die freien Enden der die beiden Aufnahmerinnen (5, 6) miteinander verbindenden Versteifungsrippen (15) angeformt ist.

5. Abdeckeinheit nach Anspruch 4, dadurch gekennzeichnet, daß der Boden (11) der drei Aufnahmerinnen (7, 8, 9) in einer Fläche verläuft.

6. Abdeckeinheit nach einem der vorstehenden Ansprüche, dadurch gekennzeichnet, daß der in die Abschlußscheiben (5, 6) hineinragende Kragen (12 bzw. 13) zumindest in einem Abschnitt durch einen an seine Innenseite angeformten Schirm (18), welcher mit seinem freien Ende zur Rückseite der Abdeckeinheit hin weist, doppelwandig ausgeführt ist.

7. Abdeckeinheit nach einem der vorstehenden Ansprüche, dadurch gekennzeichnet, daß die beiden schalenförmigen Abschlußscheiben (5, 6) durch mindestens einen Steg (19), welcher an ihre äußeren sich zugewandten Randabschnitte angeformt ist, einstückig hergestellt sind.

8. Abdeckeinheit nach einem der vorstehenden Ansprüche, dadurch gekennzeichnet, daß die innere Seitenwand (20) der Aufnahmerinnen (7, 8) für die Abschlußscheiben (5, 6) zur Vorderseite der Abdeckeinheit hin in den Kragen (12 bzw. 13) übergeht.

9. Abdeckeinheit nach einem der vorstehenden Ansprüche, dadurch gekennzeichnet, daß in die auf der Rückseite des Rahmens (1) verlaufende Aufnahmerinne (9) eine Ringdichtung (21) eingesetzt ist, mit welcher die Abdeckeinheit an den Rand eines Gehäuses (24) dicht anlegbar ist.

10. Abdeckeinheit nach einem der vorstehenden Ansprüche, dadurch gekennzeichnet, daß die Innen- und Außenseite des an den Rand der beiden Öffnungen (3, 4) angeformten Kragens (12 bzw. 13) mit einer Oberflächenschicht versehen ist.

11. Abdeckeinheit nach einem der vorstehenden Ansprüche, dadurch gekennzeichnet, daß eine von der Rückseite der Abdeckeinheit her in eine Öffnung (3) des Rahmens (1) eingesetzte und einen Abschnitt der Öffnung (3) abdeckende lichtdurchlässige Lichtscheibe (22) mit an ihrem äußeren umlaufenden Rand angeformten und in Einsetzrichtung der Lichtscheibe (22) weisenden Fahnen (23) in entsprechend große Schlitze des Randes der Öffnung (3) des Rahmens (1) eingeschoben ist, den Abschnitt einer inneren Seitenwand (16) der Aufnahmerinne für eine der Abschlußscheiben (5, 6) komplettiert und zusammen mit der Abschlußscheibe (5) in der Aufnahmerinne (8) mit dem Rahmen (1) verklebt ist.

12. Abdeckeinheit nach Anspruch (11), dadurch gekennzeichnet, daß im Bereich der lichtdurchlässigen Lichtscheibe (22) der Kragen (12) frei von einem Schirm (18) ist und die lichtdurchlässige Lichtscheibe (22) an die Innenseite des Kragens (12) angrenzt.

## Claims

1. Cover unit for a housing accommodating reflectors on a motor vehicle lamp unit, having a frame (1) which on the outer rim of its reverse face has an all-round contact surface for the housing (24) and which incorporates two openings (3, 4), and having a dish-shaped cover plate (5, 6) which engages by its outer all-round rim tightly into a locating channel (7 and 8, respectively) incorporated in the front of the frame (1),
characterised in that
- the contact surface (2) which extends on the reverse of the frame (1) is formed by the inner face of a locating channel (9) incorporated in the outer rim of the frame (1),
- the locating channel (9) featuring the contact surface (2) extends contiguously with the two openings (3, 4), except for one wall section (10) of the frame (1) which extends between the openings (3, 4),
- the openings (3, 4) in the frame (1) are sealed by a respective deep, dish-shaped, transparent cover plate (5, 6),
the opening (3, 4) in the frame (1) is adjoined contiguously all round by a respective locating channel (7, 8) for one of the cover plates (5, 6);
- in the sections in which it extends contiguously with one of the two openings (3, 4), the locating channel (9) featuring the contact surface (2) has a common base (11) with one of the two locating channels (7, 8),
- formed all round onto the rim of the openings (3, 4) in the frame (1) is a collar (12 and 13, respectively) which projects into the dish-shaped cover plate (5, 6).

2. Cover unit according to claim 1, characterised in that the locating channels (7, 8) for the cover plates (5, 6) are interconnected on the mutually facing side walls (14) by stiffening ribs (15, 17).

3. Cover unit according to claim 2, characterised in that a stiffening rib (15) is formed onto the reverse of the sections of the locating channel (9) featuring the contact surface (2) for the housing (24), which sections extend between the two locating channels (7, 8) for the cover plates (5, 6), and that said rib (15) merges into the inner side wall (16) of the locating channel (9) featuring the contact surface (2).

4. Cover unit according to claim 3, characterised in that the wall section (10) of the frame (1) which extends between the cover plates (5, 6) is formed onto the free ends of the mutually facing side walls (14) of the locating channels (7, 8) for the cover plates (5, 6) and the free ends of the stiffening ribs (15) interconnecting the two locating channels (5, 6).

5. Cover unit according to claim 4, characterised in that the base (11) of the three locating channels (7, 8, 9) extends in one plane.

6. Cover unit according to any of the preceding claims, characterised in that the collar (12 and 13, respectively) which projects into the cover plates (5, 6) is a double-skin construction at least in one section, thanks to a shield (18) which is formed on its inner face and the free end of which points to the reverse of the cover unit.

7. Cover unit according to any of the preceding claims, characterised in that the two dish-shaped cover plates (5, 6) are produced in one piece thanks to at least one land (19) which is formed on their outer, mutually facing rim sections.

8. Cover unit according to any of the preceding claims, characterised in that the inner side wall (20) of the locating channels (7, 8) for the cover plates (5, 6) merges into the collar (12 and 13, respectively) towards the front of the cover unit.

9. Cover unit according to any of the preceding claims, characterised in that inserted into the locating channel (9) which extends on the reverse of the frame (1) is a ring seal (21) by means of which the cover unit can be set tightly against the rim of a housing (24).

10. Cover unit according to any of the preceding claims, characterised in that the inside and outside of the collar (12 and 13, respectively) formed on the rim of the two openings (3, 4) is provided with a surface coating.

11. Cover unit according to any of the preceding claims, characterised in that a transparent lens (22) inserted from the reverse of the cover unit into an opening (3) in the frame (1) and covering a section of the opening (3) is pushed into slots of a corresponding size in the rim of the opening (3) in the frame (1) by lugs (23) formed on its outer circumferential rim and pointing in the direction in which the lens (22) is inserted, completes the section of an inner side wall (16) of the locating channel for one of the cover plates (5, 6) and together with the cover plate (5) is cemented in the locating channel (8) to the frame (1).

12. Cover unit according to claim 11, characterised in that in the region of the transparent lens (22) the collar (12) is without a shield (18) and the transparent lens (22) is contiguous with the inner face of the collar (12).

## Revendications

1. Bloc de capotage pour un boîtier, recevant des réflecteurs, d'un bloc-phare pour véhicules à moteur, comportant un cadre (1) qui présente sur sa face arrière, sur le bord extérieur, tout autour, une surface d'appui pour le boîtier (24) et dans lequel sont prévues deux ouvertures (3, 4), ainsi qu'une verrine d'obturation (5, 6) en forme de coque qui obture les ouvertures (3, 4) du cadre (1) et qui, par son bord périphérique extérieur, vient en prise, avec étanchéité, dans une rigole réceptrice (7 ou 8) prévue dans la face avant du cadre,
caractérisé par le fait que
- la surface d'appui (2) réalisée sur la face arrière du cadre (1) est formée par la face intérieure d'une rigole réceptrice (9) prévue dans le bord extérieur du cadre (1),
- à l'exception d'un tronçon de paroi (10) du cadre (1) placé entre les ouvertures (3, 4), la rigole réceptrice (9) présentant la surface d'appui (2) jouxte les deux ouvertures (3, 4)
- les ouvertures (3, 4) du cadre (1) sont chacune obturées par une verrine d'obturation (5, 6) transparente à la lumière, en forme de coque profonde,
- chacune des ouvertures (3, 4) du cadre (1) est entourée d'une rigole réceptrice (7, 8), qui la jouxte, pour l'une des verrines d'obturation (5, 6);
- sur les tronçons sur lesquels elle jouxte l'une des deux ouvertures (3, 4), la rigole réceptrice (9) qui présente la surface d'appui (2) présente un fond commun (11) avec l'une des deux rigoles réceptrices (7, 8),
- au bord des ouvertures (3, 4) du cadre (1) est formé, tout autour, un collet (12 ou 13) qui pénètre dans la verrine d'obturation (5, 6) en forme de coque.

2. Bloc de capotage selon la revendication 1, caractérisé par le fait que les rigoles réceptrices (7, 8) pour les verrines d' obturation (5, 6) sont reliées l'une à l'autre par des nervures de raidissage (15, 17) aux parois latérales (14) orientées l'une vers l'autre.

3. Bloc de capotage selon la revendication 2, caractérisé par le fait qu'une nervure de raidissage (15) est formée sur la face arrière des tronçons, placés entre les deux rigoles réceptrices (7, 8) prévues pour les verrines d'obturation (5, 6), de la rigole réceptrice (9) qui présente la surface d'appui (2) pour le boîtier (24) et qu'elle se convertit en la paroi latérale intérieure (16) de la rigole réceptrice (9) présentant la surface d'appui (2).

4. Bloc de capotage selon la revendication 3, caractérisé par le fait que le tronçon de paroi (10) du cadre (1) placé entre les verrines d'obturation (5, 6) est formé sur les extrémités libres des parois latérales (14), orientées l'une vers l'autre, des rigoles réceptrices (7, 8) prévues pour les verrines d'obturation (5, 6) et sur les extrémités libres des nervures de raidissage (15) qui relient l'une à l'autre les deux rigoles réceptrices (5, 6).

5. Bloc de capotage selon la revendication 5, caractérisé par le fait que le fond (11) des trois rigoles réceptrices (7, 8, 9) se trouve dans un plan.

6. Bloc de capotage selon l'une des revendications précédentes, caractérisé par le fait que le collet (12 ou 13) qui pénètre dans les verrines d'obturation (5, 6) est réalisé, au moins sur un tronçon, à double paroi par un écran (18) qui est formé sur sa face intérieure et qui, par son extrémité libre, est orientée vers la face arrière du bloc de capotage.

7. Bloc de capotage selon l'une des revendications précédentes, caractérisé par le fait que les deux verrines d'obturation (5, 6) en forme de coque sont réalisées d'une seule pièce par l'intermédiaire d'au moins une barrette (19) formée sur leurs tronçons de bordure extérieure orientés l'un vers l'autre.

8. Bloc de capotage selon l'une des revendications précédentes, caractérisé par le fait que la paroi latérale intérieure (20) des rigoles réceptrices (7, 8) prévues pour les verrines d'obturation (5, 6), en direction de la face avant du bloc de capotage, se convertit en le collet 12 ou 13).

9. Bloc de capotage selon l'une des revendications précédentes, caractérisé par le fait que dans la rigole réceptrice (9) qui court sur la face arrière du cadre (1) est insérée une garniture d'étanchéité annulaire (2) grâce à laquelle le bloc de capotage peut s'appuyer de façon étanche contre le bord d'un boîtier (24).

10. Bloc de capotage selon l'une des revendications précédentes, caractérisé par le fait que la face intérieure et la face extérieure du collet (12 ou 13) formé sur le bord des deux ouvertures (3, 4) présentent une couche de surface.

11. Bloc de capotage selon l'une des revendications précédentes, caractérisé par le fait qu'une plaquette transparente à la lumière (22), insérée, par la face arrière du bloc de capotage, dans une ouverture (3) du cadre (1) et recouvrant un tronçon de l'ouverture (3), s'enfiche, par des talons (23) formés sur son bord périphérique extérieur et orientés dans le sens d' insertion de la plaquette (22), dans des fentes, de dimension appropriée, du bord de l'ouverture (3) du cadre (1), complète le tronçon d'une paroi latérale intérieure (16) de la rigole réceptrice, prévue pour l'une des verrines d'obturation (5, 6) et qu'avec la verrine d'obturation (5) elle est collée avec le cadre (1) dans la rigole réceptrice (8).

12. Bloc de capotage selon la revendication 11, caractérisé par le fait qu'au voisinage de la plaquette transparente à la lumière (22), le collet (12) ne comporte pas d'écran (18) et que la plaquette transparente à la lumière (22) jouxte la face intérieure du collet (12).
